(19) Europäisches Patentamt
European Patent Office
Office européen des brevets

(11) **EP 4 545 961 A1**

(12) **EUROPEAN PATENT APPLICATION**
published in accordance with Art. 153(4) EPC

(43) Date of publication:
**30.04.2025 Bulletin 2025/18**

(21) Application number: **23826452.7**

(22) Date of filing: **20.06.2023**

(51) International Patent Classification (IPC):
*G01N 29/04* (2006.01)

(52) Cooperative Patent Classification (CPC):
**G01N 29/04; G01N 29/24; G01N 29/30**

(86) International application number:
**PCT/CN2023/101485**

(87) International publication number:
**WO 2023/246805 (28.12.2023 Gazette 2023/52)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **23.06.2022 CN 202210724358**

(71) Applicant: **Aecc Commercial Aircraft Engine Co.,
Ltd.
Shanghai 200241 (CN)**

(72) Inventors:
• **DENG, Xiaodong**
  **Shanghai 200241 (CN)**
• **SHI, Xiaoying**
  **Shanghai 200241 (CN)**
• **YANG, Juan**
  **Shanghai 200241 (CN)**
• **CHEN, Chen**
  **Shanghai 200241 (CN)**
• **HAN, Xiufeng**
  **Shanghai 200241 (CN)**

(74) Representative: **Marchioro, Paolo
Studio Bonini S.r.l.
Corso Fogazzaro, 8
36100 Vicenza (IT)**

(54) **ULTRASONIC DETECTION METHOD FOR COMPOSITE MATERIAL PART**

(57)    The purpose of the present disclosure is to provide an ultrasonic detection method for a composite material part, comprising the following steps: using the same material and preparation process as a part to be detected to prepare comparison test blocks of multiple angles; determining the sound attenuation caused by a corresponding tilt angle according to the comparison test blocks of multiple angles, so as to obtain a compensation DAC correction curve; obtaining the best incident angle detected by a reflection method, the best incident angle detected by a penetration method, and the best reception angle detected by the penetration method; detecting the part by using the penetration method, and then detecting the part for a second time by using the reflection method. When detecting the slope, the detection sensitivity is adjusted according to the DAC correction curve. The ultrasonic detection method for a composite material part can improve the accuracy of performing detection on parts with complex shapes and structures.

FIG. 3

## Description

### Technical Field

The present disclosure relates to the technical field of testing, and in particular, to a method for ultrasonic testing of a composite material part.

### Background Art

A composite material refers to a material with new properties that is macroscopically composed of two or more materials with different properties by physical or chemical means. Compared with a conventional metallic material, the composite material has the advantages of low density, high specific strength, impact resistance, corrosion resistance, etc., and has broad application prospects in aerospace and other fields. To evaluate the reliability of the composite material, non-destructive testing of a composite material part is required, and ultrasonic testing is one of the most commonly used non-destructive testing methods. Ultrasonic testing refers to a non-destructive testing method for testing an internal structure and defects of the material by means of ultrasonic waves.

To meet structural, pneumatic and other design requirements, composite material parts used in aero engines often have complex profiles and structures, causing many challenges to ultrasonic testing of the composite material parts. There is an urgent need to provide a method for ultrasonic testing of a composite material part to achieve accurate testing of a part with a complex profile and structure.

### Summary of the Invention

An objective of the present disclosure is to provide a method for ultrasonic testing of a composite material part to improve accuracy of testing of a part with a complex profile and structure.

A method for ultrasonic testing of a composite material part for achieving the aforementioned objective is configured to perform ultrasonic testing on a composite material part. A part to be tested has at least one inclined surface.

The method comprises steps of:

preparing a plurality of angled reference blocks by using the same material and preparation process as the part to be tested, each angled reference block having an inclined surface section, an inclination angle being formed between an upper surface of the inclined surface section and a bottom surface of the angled reference block, and a plurality of inclination angles of the plurality of angled reference blocks comprising at least a maximum value, a minimum value and an intermediate value of an inclination angle of the inclined surface of the part to be tested;

determining acoustic attenuation caused by corresponding inclination angles based on the plurality of angled reference blocks;

correcting a DAC curve in a vertical incidence testing mode based on the acoustic attenuation to obtain a compensation DAC correction curve;

obtaining an optimal incident angle for reflection method testing, and obtaining a first DAC correction curve when an incident angle is the optimal incident angle for reflection method testing; and

obtaining an optimal incident angle for penetration method testing and an optimal receiving angle for penetration method testing;

testing the part by a penetration method, and testing the inclined surface with an incident probe being at the corresponding optimal incident angle for penetration method testing, and a receiving probe and a surface of the part forming the corresponding optimal receiving angle for penetration method testing;

testing the part for a first time by a reflection method, with the incident probe being perpendicular to the surface of the part, and adjusting a testing sensitivity based on the compensation DAC correction curve; and

testing the part for a second time by the reflection method, with the incident probe and the surface of the part forming the corresponding optimal incident angle for reflection method testing during testing of the inclined surface, and adjusting the testing sensitivity based on the first DAC correction curve.

In one or more embodiments, each of the angled reference blocks further has a first parallel section and a second parallel section, and the inclined surface section is connected between the first parallel section and the second parallel section,

wherein a thickness of the first parallel section is the same as a thickness of a thinnest portion of the part to be tested, and a thickness of the second parallel section is greater than a thickness of a thickest portion of the part to be tested.

In one or more embodiments, determining the acoustic attenuation comprises steps of:

placing an ultrasonic probe at the first parallel section, measuring a bottom echo, and adjusting an echo height to 80% of a full screen height to obtain a first gain value;

placing an ultrasonic probe at a junction of the inclined surface section and the first parallel section, adjusting an angle of the ultrasonic probe such that an incident angle of a sound wave emitted by the ultrasonic probe is perpendicular to the inclined surface section, measuring a bottom echo, and adjusting an echo height to 80% of the full screen height to obtain a second gain value; and

subtracting the first gain value from the second gain value to obtain an angle compensation value of the angled reference block, and reflecting the acoustic attenuation corresponding to an inclination angle by the angle compensation value.

In one or more embodiments, the method further comprises steps of:

obtaining a testing boundary point of the angled reference block at the inclined surface section, and dividing the inclined surface section into a first inclined surface section and a second inclined surface section with the testing boundary point as a boundary, the first inclined surface section extending from a terminal position of the first parallel section to the testing boundary point, and the second inclined surface section extending from the testing boundary point to an initial position of the second parallel section,

wherein the second inclined surface section is tested by double probes.

In one or more embodiments, determining the testing boundary point comprises steps of:

recording, from the junction of the inclined surface section and the first parallel section, a bottom echo height at a corresponding position at a regular interval of distance, and adjusting the echo height to 80% of the full screen height of a display to obtain a third gain value;

calculating a bottom reflection distance in an acoustic propagation direction perpendicular to a slope surface;

drawing a correlation curve between the bottom reflection distance and the third gain value;

calculating a first difference between the third gain value obtained at the regular interval of distance and the first gain; and

obtaining a first threshold, determining a magnitude relationship between the first difference and the first threshold, and if the first difference is greater than the first threshold, selecting a first testing point after the first difference is greater than the first threshold as the testing boundary point.

In one or more embodiments, obtaining the optimal incident angle for reflection method testing comprises steps of:

taking, based on an angle of the inclined surface of the part to be tested, a corresponding angled reference block, and inverting the angled reference block;

using an incident probe to project an ultrasonic wave from an inverted bottom reflection horizontal plane at an angle perpendicular to the plane, and using a receiving probe to receive a transmitted ultrasonic signal from the inclined surface section; and

adjusting an angle of the receiving probe such that the received signal reaches a maximum value, and obtaining an included angle between an ultrasonic direction and the inclined surface section in this case as the optimal incident angle for reflection method testing.

In one or more embodiments, obtaining the first DAC correction curve comprises steps of:

measuring a bottom reflection distance and a gain value when the incident angle is the optimal incident angle for reflection method testing;

drawing a bottom reflection distance and echo gain curve when the incident angle is the optimal incident angle for reflection method testing; and

calculating an angle compensation value of the angled reference block when the incident angle is the optimal incident angle for reflection method testing, and correcting the DAC curve in the vertical incidence testing mode based on the angle compensation value.

In one or more embodiments, obtaining the optimal incident angle for penetration method testing and the optimal receiving angle for penetration method testing comprises steps of:

determining the optimal incident angle for penetration method testing as an angle perpendicular to a testing surface of the part;

taking, based on an angle of the inclined surface of the part to be tested, a corresponding angled reference block, and inverting the angled reference block;

using an incident probe to project an ultrasonic wave from an inverted bottom reflection horizontal plane at an angle perpendicular to the plane, and using a receiving probe to receive a transmitted ultrasonic signal from the inclined surface section; and

adjusting an angle of the receiving probe such that the received signal reaches a maximum value, and recording an included angle between a direction in which the receiving probe receives the ultrasonic wave and the inclined surface section in this case as the optimal receiving angle for penetration method testing.

In one or more embodiments, the part to be tested further comprises a stepped structure, and the method for ultrasonic testing of a composite material part further comprises:

preparing a stepped reference block by using the same material and preparation process as the part to be tested; and providing an artificial defect in the stepped reference block.

In one or more embodiments, the method for ultrasonic testing of a composite material part is configured to test a composite material engine case.

The present disclosure has the following beneficial effects.

1) In view of the shortcomings of inaccurate testing results due to the great influence of acoustic attenuation of a composite material with a complex profile on DAC, a method for ultrasonic testing of composite material parts with different angles and profiles for DAC correction is established to improve the testing accuracy.

2) In view of the problems of inapplicability of testing methods and inaccurate testing results due to changes in an angle of a testing surface, testing boundary points of single-probe and double-probe reflection methods are determined, an optimized testing scheme is formulated, and step-by-step scanning is performed to eliminate a testing blind area and improve testing reliability.

The above description is only an overview of the technical solutions of the present application. To more clearly understand the technical means of the present application to implement the same according to the contents of the description, and to make the above and other objectives, features, and advantages of the present application more obvious and understandable, specific implementations of the present application are exemplarily described below.

**Brief Description of the Drawings**

Various other advantages and benefits will become apparent to those of ordinary skill in the art upon reading the following detailed description of preferred implementations. The accompanying drawings are provided merely to illustrate the preferred implementations, rather than to limit the present application. Moreover, like components are denoted by like reference signs throughout the accompanying drawings. In the drawings:

FIG. 1 is a schematic diagram of a part to be tested according to some embodiments of the present application;

FIG. 2 is a schematic diagram of an angled reference block according to some embodiments of the present application;

FIG. 3 is a schematic diagram showing transmission of a sound wave in an angled reference block according to some embodiments of the present application;

FIGS. 4A to 4D are schematic diagrams showing a principle of testing a part by a penetration method and a reflection method;

FIG. 5 is a schematic diagram showing obtaining of an optimal incident angle in a reflection method by an angled reference block according to some embodiments of the present application;

FIG. 6 is a schematic diagram showing obtaining of an optimal incident angle in a transmission method by an angled reference block according to some embodiments of the present application; and

FIG. 7 is a schematic diagram of a stepped reference block according to some embodiments of the present application.

**Detailed Description of Embodiments**

Embodiments of the technical solutions of the present application are described in detail below with reference to the accompanying drawings. The following embodiments are used merely to clearly illustrate the technical solutions of the present application. Therefore, these embodiments are merely exemplary and are not intended to limit the scope of protection of the present application.

Unless otherwise defined, all technical and scientific terms used herein have the same meanings as those commonly understood by those skilled in the art to which the present application belongs. The terms used herein are merely intended to describe the specific embodiments, but are not intended to limit the present application. The terms "comprise" and "have" and any variations thereof in the description and the claims of the present application as well as the brief description of the drawings described above are intended to cover non-exclusive inclusion.

Compared with a conventional metal material, a composite material has higher attenuation and anisotropy, and there are greater differences between parts prepared by using different structures and preparation processes. A conventional ultrasonic testing method of adjusting a testing sensitivity by measuring a DAC curve is limited. Therefore, it is necessary to develop a method for establishing a DAC curve suitable for a composite material to quantitatively measure an internal defect of the composite material. To establish the DAC curve, it is necessary to design and prepare a special test block suitable for the composite material.

The inventors have found that in a conventional method for ultrasonic testing of a composite material part, generally, a DAC curve is measured directly on a flat test block, without considering the influence of the anisotropy of a composite material and changes in an angle of a profile on acoustic attenuation. A regular (such as flat) reference block is used for a conventional composite material, without considering the influence of the actual profile and structure of the part on the sensitivity, and the reference block cannot represent actual testing results of the part. In a conventional testing method, a testing mode in which testing is performed perpendicular to a testing surface is used for scanning. However, this testing mode does not consider the influence of changes in a reflection angle and a transmission angle of a complex profile on testing parameters such as a testing angle, testing single-probe selection and a testing blind area. This results in a poor testing effect, or even a failure to receive a reflected signal.

In the prior art, a method for determining a gradient thickness coefficient for ultrasonic testing of a composite material is used for compensating for an ultrasonic testing signal of a composite material structure with a gradient thickness. Existing methods take into account changes in a propagation behaviour of an incident sound wave in a composite material due to a gradient thickness of a composite material structure, and a testing system is compensated based on a gradient thickness coefficient, thereby improving the testing accuracy. However, in the existing methods, the influence of structural changes, such as changes in a reflection angle and a transmission angle of an ultrasonic wave at a corner, on testing is not taken into account, the influence of a testing blind area on the reliability of a testing method is not taken into account, and no testing scheme is optimized in terms of limitations of the testing blind area and a reflection method.

After research, the applicant has found that due to a complex profile of a composite material, changes in a reflection angle and a transmission angle have a great influence on testing, and a conventional vertical incidence testing method is no longer applicable. It is necessary to establish a testing scheme suitable for a part with a complex structure and determine an optimal testing angle to improve the accuracy of testing results.

The following problems existing in the conventional methods for ultrasonic testing of a composite material need to be overcome.

1) Acoustic attenuation of a composite material with a complex profile has a great influence on DAC, so that testing results are inaccurate.
2) There is no suitable reference block for ultrasonic testing of the composite material with a complex profile.
3) The complex profile makes a conventional single testing method and testing parameters unsuitable for scanning an entire part, or even leads to generation of a testing blind area.

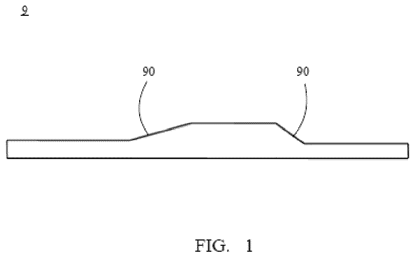

According to some embodiments of the present application, a method for ultrasonic testing of a composite material part is provided, which is configured to perform ultrasonic testing on a composite material part 9 shown in FIG. 1. The composite material part 9 has at least one inclined surface 90. Of course, the composite material part 9 as shown in FIG. 1 having two inclined surfaces 90 is only an example. It may be understood that the method for ultrasonic testing of a composite material part is suitable for performing ultrasonic testing on composite material parts with at least one inclined surface in other configurations.

The method for ultrasonic testing of a composite material part comprises the following steps.

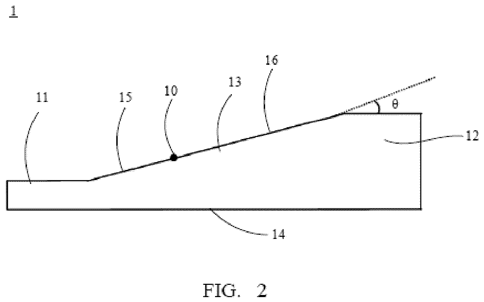

A plurality of angled reference blocks are prepared by using the same material and preparation process as a part to be tested. FIG. 2 is a perspective view of an angled reference block in an implementation. Each angled reference block 1 has a first parallel section 11, a second parallel section 12, and an inclined surface section 13 connected between the first parallel section 11 and the second parallel section 12. Upper surfaces of the first parallel section 11 and the second parallel section 12 are parallel to a bottom surface 14 of the angled reference block. An inclination angle $\theta$ is formed between an upper surface of the inclined surface section 13 and the bottom surface 14 of the angled reference block. A plurality of inclination angles of the plurality of angled reference blocks 1 comprise at least a maximum value, a minimum value and an intermediate value of an inclination angle of the inclined surface of the part to be tested. That is, a plurality of inclined surface sections 13 of the plurality of angled reference blocks 1 each have a corresponding inclination angle θ. The plurality of inclination angles θ comprise the maximum value, the minimum value and the intermediate value of the inclination angle of the inclined surface of the part 9 to be tested. A thickness of the first parallel section 11 is the same as a thickness of a thinnest portion of the part 9 to be tested, and a thickness of the second parallel section 12 is greater than a thickness of a thickest portion of the part 9 to be tested. Taking FIG. 1 as an example, the thickness of the first parallel section 11 is the same as that of the thinnest portion of the part 9 to be tested, that is, a portion on a side of each of the two inclined surfaces 90, and the thickness of the second parallel section 12 is greater than that of the thickest portion of the part 9 to be tested, that is, a portion between the two inclined surfaces 90 of the part.

Then, acoustic attenuation caused by an inclination angle θ corresponding to each angled reference block 1 is determined based on the plurality of angled reference blocks 1.

In a specific embodiment, determining the acoustic attenuation comprises the following steps.

An ultrasonic probe is placed at the first parallel section 11 of the angled reference block 1, a bottom echo is measured, and an echo height is adjusted to 80% of a full screen height to obtain a first gain value $\Delta H_0$.

An ultrasonic probe is placed at a junction of the inclined surface section 13 and the first parallel section 11 of the angled reference block 1, an angle of the ultrasonic probe is adjusted such that an incident angle of a sound wave emitted by the ultrasonic probe is perpendicular to the inclined surface section 13, a bottom echo is measured, and an echo height is adjusted to 80% of the full screen height to obtain a second gain value $\Delta H_1$.

The first gain value $\Delta H_0$ is subtracted from the second gain value $\Delta H_1$ to obtain an angle compensation value $\Delta B_{\theta 0}$ corresponding to the angled reference block 1, and the acoustic attenuation caused by a corresponding inclination angle θ is reflected by the angle compensation value $\Delta B_{\theta 0}$.

Then, optionally, a testing boundary point of the angled reference block is obtained at the inclined surface section 13, and the inclined surface section 13 is divided into a first inclined surface section and a second inclined surface section with the testing boundary point as a boundary. The first inclined surface section extends from a terminal position of the first parallel section to the testing boundary point, and the second inclined surface section extends from the testing boundary point to an initial position of the second parallel section. Taking the reference block shown in FIG. 2 as an example, a testing boundary point 10 of the angled reference block 1 is obtained, and the testing boundary point 10 divides the angled reference block 1 into a first inclined surface section 15 and a second inclined surface section 16.

In a specific embodiment, determining the testing boundary point 10 comprises the following steps.

From the junction of the inclined surface section 13 and the first parallel section 11 of the angled reference block 1, a bottom echo height at a corresponding position is recorded at a regular interval of distance Δd, and the echo height is adjusted to 80% of the full screen height of a display to obtain a third gain value $\Delta H_j$.

A bottom reflection distance $d_j$ in an acoustic propagation direction perpendicular to a slope surface is calculated, where a propagation distance corresponding to a testing position at an interval of (j-1)Δd is denoted as $d_j$.

Then, a correlation curve between the bottom reflection distance $d_j$ and the third gain value $\Delta H_j$ is drawn and denoted as a $d_j$-$\Delta H_j$ curve.

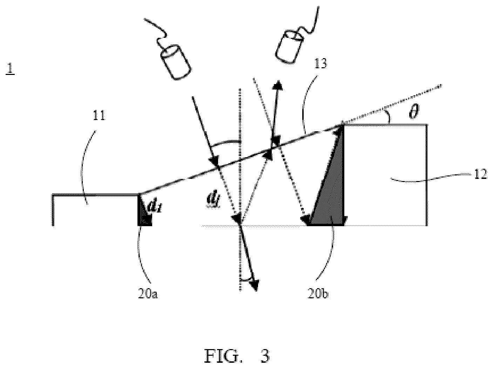

Taking FIG. 3 as an example, if a propagation path of a sound wave at an initial position of a slope inside a material is marked as $d_1$, and an inclination angle θ is formed between an upper surface of an inclined surface section 13 and a bottom surface 14 of an angled reference block,

$$d_1 = d_0 / \cos\theta \text{; and } d_j = d_0 / \cos\theta + (j-1)\Delta d \times \tan\theta.$$

Then, a first difference $\Delta B_{\theta j}$ between the third gain value $\Delta H_j$ obtained at a regular interval of distance Δd and the first gain $\Delta H_0$ measured in the parallel section is calculated.

A first threshold is obtained, and a magnitude relationship between the first difference $\Delta B_{\theta j}$ and the first threshold is determined. If the first difference $\Delta B_{\theta j}$ is greater than the first threshold, it is believed that acoustic attenuation caused by an angle and a detection distance exceeds a detection range of a single probe. In this case, a first testing point after the first difference $\Delta B_{\theta j}$ is greater than the first threshold is selected as the testing boundary point 10.

In a specific embodiment, the value of the first threshold is an empirical value derived from multiple trials and errors, for example, 6 dB. That is, when $\Delta B_{\theta j}$ is greater than 6 dB, it is believed that acoustic attenuation caused by an angle and a detection distance exceeds a detection range of a single probe. The first testing point after the first difference $\Delta B_{\theta j}$ is greater than or equal to 6 dB is considered to be a reflection method testing limit of a single probe.

Then, a DAC curve in a vertical incidence testing mode is corrected based on the angle compensation value $\Delta B_{\theta 0}$. For example, first, a basic DAC curve of the part is obtained in the vertical incidence testing mode in which an incident probe is perpendicular to the surface of the part, that is, perpendicular to the first parallel section 11, the second parallel section 12 and the inclined surface section 13, respectively. Then, if a detected defect is buried below the propagation path $d_1$ of the sound wave at the initial position of the slope inside the material, an angle compensation value of the angled block, that is,

$\Delta B_\theta$, is directly added to each point of the DAC curve at the first parallel section 11. If a detected defect is buried above the propagation path $d_1$ of the sound wave at the initial position of the slope inside the material, a difference between the third gain value $\Delta H_j$ and the gain value $\Delta H_1$ at the initial position of the inclined surface section 13 (that is, $\Delta H_j$ - $\Delta H_1$) is sequentially added to the value $d_j$ corresponding to each point of the DAC curve at the inclined surface section 13 and the second parallel section 12. Correction of the entire DAC curve is completed to obtain a compensation DAC correction curve: DAC-0.

Based on a propagation direction of an ultrasonic wave in the part, it can be determined that there is a testing blind area in the angled reference block 1. Taking FIG. 3 as an example, there is an included angle between a testing surface and a bottom reflection surface, there is a triangular blind area at a bottom and a top of the slope due to the angle $\theta$. The angled reference block 1 has a first testing blind area 20a and a second testing blind area 20b.

Subsequently, in this testing method, a reflection method and a penetration method are used for testing. It may be understood that for both the reflection method and the penetration method, there are testing blind areas shown in FIG. 3.

For a better understanding of the present disclosure, modes in which testing is performed by the reflection method and the penetration method are described in detail below.

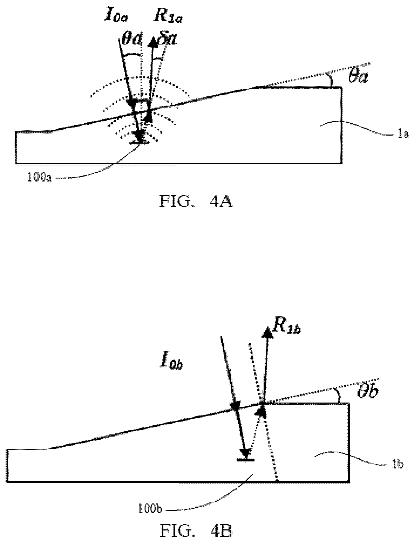

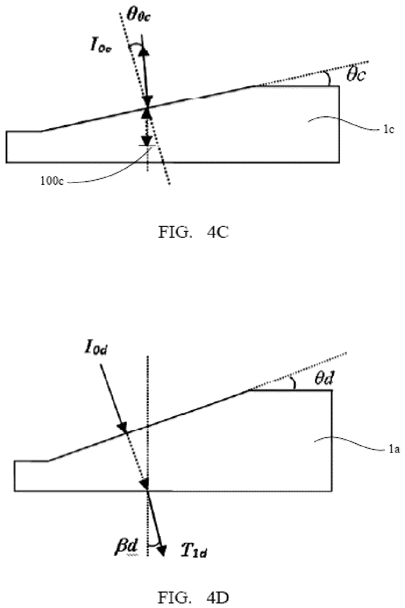

Regarding the reflection method, as shown in FIG. 4A, there is a defect 100a in an angled reference block 1a, with an included angle between an inclined surface section and a bottom surface thereof being detected as $\theta a$. An incident probe allows incidence at an angle perpendicular to the inclined surface section, and an incident path is $I_{0a}$. A refraction path after the defect 100a is detected as $R_{1a}$. Incident and refracted ultrasonic waves are collected by a probe so as to be tested. Due to the presence of an included angle $\theta a$ between an incident plane and a defect plane, during vertical incidence, a point at which a reflected wave is generated is deviated from an incident point, resulting in a deviation angle $\delta a$. As shown in FIG. 4B, there is a defect 100b in an angled reference block 1b, with an included angle between an inclined surface section and a bottom surface thereof being defined as $\theta b$. Since the defect 100b has a too large depth, a distance between an incident path $I_{0b}$ and a refraction path $R_{1b}$ after the defect 100b is detected is beyond a detection range of a single probe, and therefore it is necessary to obtain a testing boundary point as mentioned above. As shown in FIG. 4C, there is a defect 100c in an angled reference block 1c, with an included angle between an inclined surface section and a bottom surface thereof being defined as $\theta c$. To maximize a reflection echo of the defect and allow the echo to be detected by a probe, an optimal way is that an incident wave transmits through a testing surface, then propagates to the defect in a direction perpendicular to an extension direction of the defect, is reflected back in a direction opposite to an incident direction and perpendicular to the extension direction of the defect, and finally is received by the probe. As shown in FIG. 4C, when an incident probe allows incidence along an incident path $I_{0c}$, that is, at an included angle of $\theta_{0c}$ with respect to the inclined surface section, the incident wave can propagate to the defect 100c in the direction perpendicular to the extension direction of defect. The incident angle $\theta_{0c}$ in this case is the optimal incident angle. Regarding the penetration method, for a composite material, in addition to the reflection method testing, the influence of a test thickness and acoustic attenuation on the testing sensitivity should be also considered. For a composite material with a large thickness and high acoustic attenuation, the penetration method is selected for testing, and reflection method ultrasonic testing is then performed on a defect found by the penetration method testing, to quantitatively evaluate properties and dimensions of the defect. As shown in FIG. 4D, for an angled reference block 1d, an incident path is defined as $I_{0d}$, and incidence is performed along an incident path $I_{0d}$ at an angle perpendicular to an inclined surface section. After penetrating the part, the ultrasonic wave is delivered along an exit path $T_{1d}$. Since there is an included angle $\theta d$ between the inclined surface section and a bottom surface, there is an included angle $\beta d$ between the exit path $T_{1d}$ and the bottom surface of the part. Two probes are located on two sides of the angled reference block 1d, respectively. A receiving probe receives a sound wave delivered along the exit path $T_{1d}$. When an angle of the receiving probe is adjusted to be along a propagation direction of a transmitted sound wave, a received signal is maximum, and an optimal receiving angle is provided in this case.

Based on the modes in which testing is performed by the aforementioned reflection method and penetration method, the method for ultrasonic testing of a composite material part further comprises steps of:

    obtaining an optimal incident angle for reflection method testing;
    obtaining a first DAC correction curve when an incident angle is the optimal incident angle for reflection method testing; and
    obtaining an optimal incident angle for penetration method testing and an optimal receiving angle for penetration method testing.

In a specific embodiment, determining the optimal incident angle for reflection method testing comprises the following steps.

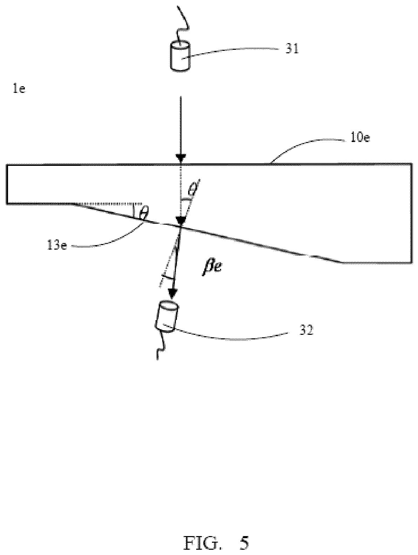

Based on an angle of the inclined surface of the part to be tested, a corresponding angled reference block 1e is taken and inverted with a bottom reflection surface facing upward, and is horizontally placed, as shown in FIG. 5.

Two ultrasonic probes are taken. An incident probe 31 is configured to transmit an ultrasonic wave and a receiving probe 32 is configured to receive the ultrasonic wave.

The incident probe 31 is used to project an ultrasonic wave from an inverted bottom reflection horizontal plane 10e at an angle perpendicular to the plane, and the receiving probe 32 is used to receive a transmitted ultrasonic signal from an inclined surface section 13e below.

Then, an angle of the receiving probe 32 is adjusted such that the received signal reaches a maximum value, and an included angle between a direction in which the receiving probe 32 receives the ultrasonic wave and the inclined surface section 13e in this case is a transmission angle βe of a bottom surface transmitted wave. The angle value in this case is recorded. As can be seen from a principle of reversibility of a sound wave circuit, the angle βe is the incident angle of the transmitted wave transmitted perpendicularly from the bottom reflection surface when the wave enters from the slope surface at this angle, and the angle βe is the optimal incident angle for reflection method testing.

Further, in a specific embodiment, obtaining the first DAC correction curve when an incident angle is the optimal incident angle for reflection method testing comprises the following steps.

First, a bottom reflection distance $d_j$ and a gain value $\Delta H_j$ when the incident angle is the optimal incident angle βe for reflection method testing are measured, for example, by the same method as the foregoing step. If the thickness of the first parallel section 11 is denoted as $d_0$, the bottom reflection distance $d_j$ is calculated based on the following formula:

$$d_1 = d_0 \text{; and } d_j = d_0 + (j-1)\Delta d \times \sin \beta e .$$

Then, a bottom reflection distance $d_j$ and echo gain $\Delta H_j$ curve ($d_j$-$\Delta H_j$ curve) when the incident angle is the optimal incident angle for reflection method testing is drawn.

Then, an angle compensation value $\Delta B_{\theta\beta e}$ of the angled reference block is calculated when the incident angle is the optimal incident angle βe for reflection method testing. For example, the value is calculated by the same method as the method for calculating the angle compensation value $\Delta B_{\theta 0}$ described above, and details are not described herein.

Then, a difference between the gain $\Delta H_j$ of each measuring point in the inclined surface section and the gain $\Delta H_0$ measured in the parallel section is calculated when the incident angle is the optimal incident angle βe for reflection method testing, and is denoted as $\Delta B_{\theta j}$.

Then, a DAC curve in a vertical incidence testing mode is corrected based on the angle compensation value $\Delta B_{\theta\beta e}$. For example, first, a basic DAC curve of the part is obtained in the vertical incidence testing mode in which an incident probe is perpendicular to the surface of the part, that is, perpendicular to the first parallel section 11, the second parallel section 12 and the inclined surface section 13, respectively. Then, if a detected defect is buried below the propagation path d1 of the sound wave at the initial position of the slope inside the material, an angle compensation value of the angled block, that is, $\Delta B_{\theta\beta e}$, is directly added to each point of the DAC curve at the first parallel section 11. If a detected defect is buried above the propagation path $d_1$ of the sound wave at the initial position of the slope inside the material, a difference between the third gain value $\Delta H_j$ and the gain value $\Delta H_1$ at the initial position of the inclined surface section 13 (that is, $\Delta H_j$ - $\Delta H_1$) is sequentially added to the value $d_j$ corresponding to each point of the DAC curve at the inclined surface section 13 and the second parallel section 12. Correction of the entire DAC curve is completed to obtain a first DAC correction curve: DAC-β. In a specific embodiment, obtaining the optimal incident angle for penetration method testing and the optimal receiving angle for penetration method testing comprises the following steps.

First, the optimal incident angle is determined, and an angle perpendicular to the testing surface is selected as the optimal incident angle. Due to energy emission of the incident sound wave, a received reflected signal is reduced. Therefore, to reduce a signal reduction degree, the optimal incident angle should be perpendicular to the testing surface. After the incident angle is determined, the method for determining the receiving angle is as follows.

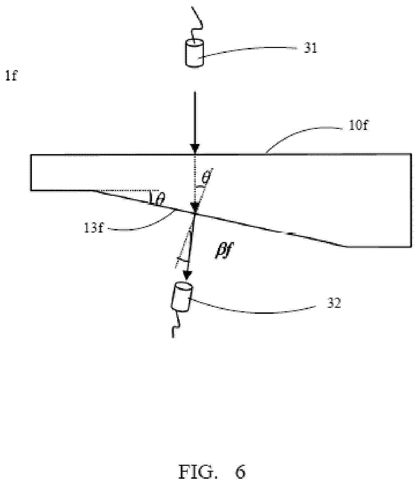

Based on an angle of the inclined surface of the part to be tested, a corresponding angled reference block 1f is taken and inverted with a bottom reflection surface facing upward, and is horizontally placed, as shown in FIG. 6.

Two ultrasonic probes are taken. An incident probe 31 is configured to transmit an ultrasonic wave and a receiving probe 32 is configured to receive the ultrasonic wave.

The incident probe 31 is used to project an ultrasonic wave from an inverted bottom reflection horizontal plane 10f at an angle perpendicular to the plane, and the receiving probe 32 is used to receive a transmitted ultrasonic signal from an inclined surface section 13f below.

Then, an angle of the receiving probe 32 is adjusted such that the received signal reaches a maximum value, and an included angle between a direction in which the receiving probe 32 receives the ultrasonic wave and the inclined surface section 13f in this case is a transmission angle βf of a bottom surface transmitted wave. The angle value in this case is recorded.

Finally, it is determined that the optimal incident angle for penetration method testing is the included angle between the incident sound wave of the probe when perpendicular to the testing surface and the testing surface, and the transmission angle βf is the optimal receiving angle for penetration method testing.

After the specific test parameters are obtained by means of the angled reference block, the method for ultrasonic testing of a composite material part further comprises the following steps.

The part is tested by the penetration method. During testing of the parallel sections, the testing is performed with the incident probe and the receiving probe each being perpendicular to the surface of the part. During testing of the inclined surface section, the testing is performed with the incident probe allowing incidence at the optimal incident angle for penetration method testing that is obtained by the angled reference block corresponding to the inclination angle of the inclined surface, and the receiving probe and the surface of the part form the optimal receiving angle for penetration method testing. Specifically, the optimal incident angle for penetration method testing means that the incident probe is perpendicular to the surface of the part.

It may be understood that the probe is perpendicular to the part or forms an included angle with the surface of the part herein means that a path of an ultrasonic wave sent or received by the probe is perpendicular to the surface of the part or forms an included angle with the surface of the part.

Then, the part is tested for a first time by the reflection method. During testing for the first time, the testing is performed with the incident probe being perpendicular to the surface of the part, and a testing sensitivity is adjusted based on the compensation DAC correction curve: DAC-0.

Then, the part is tested for a second time by the reflection method. During testing of each parallel section for the second time, the testing is performed with the incident probe being perpendicular to the surface of the part. During testing of the inclined surface section, the testing is performed with the incident probe and the surface of the part forming the corresponding optimal incident angle for reflection method testing, and the testing sensitivity is adjusted based on the first DAC correction curve: DAC-$\beta$.

When the part is tested by the reflection method, and the thickness of the part exceeds the detection range of a single probe, an area below the testing boundary point 10 is tested by a single-probe ultrasonic reflection method, while an area above the testing boundary point 10 is tested by a double-probe ultrasonic reflection method with one probe for sending and the other probe for receiving. Specifically, taking testing of a calibration reference block as an example, when the part is tested for the first time by the reflection method, the first parallel section 11, the first inclined surface section 15 and the second parallel section 12 are ultrasonically tested by a single-probe pulse reflection method, and the second inclined surface section 16 is ultrasonically tested by a double-probe pulse reflection method. When the second inclined surface section 16 is ultrasonically tested, testing is performed with an incident probe being perpendicular to the surface of the part, and an included angle between a reflection probe and the surface of the part is calculated based on a propagation path of a sound wave in the part. When the part is tested for the second time by the reflection method, the inclined surface section 13 is tested by the single-probe pulse reflection method.

The testing method mentioned above has the following advantages.

1) In view of the shortcomings of inaccurate testing results due to the great influence of acoustic attenuation of a composite material with a complex profile on DAC, a method for ultrasonic testing of composite material parts with different angles and profiles for DAC correction is established to improve the testing accuracy.

2) In view of the problems of inapplicability of testing methods and inaccurate testing results due to changes in an angle of a testing surface, testing boundary points of single-probe and double-probe reflection methods are determined, an optimized testing scheme is formulated, and step-by-step scanning is performed to eliminate a testing blind area and improve testing reliability.

In an embodiment, the part 9 to be tested in the method for ultrasonic testing of a composite material part further comprises a stepped structure. The method for ultrasonic testing of a composite material part further comprises the following steps.

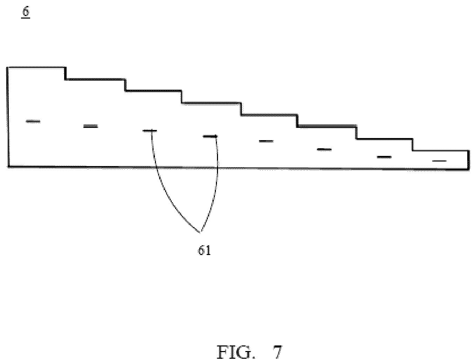

A stepped reference block is prepared by using the same material and preparation process as the part to be tested. As shown in FIG. 7, the stepped reference block 6 comprises a plurality of thicknesses. The plurality of thicknesses comprise at least a maximum value, a minimum value and an intermediate value of the thickness of the tested part.

Artificial defects 61 are provided in the stepped reference block, and sizes of the artificial defects 61 are determined based on testing requirements.

Burial depths of the artificial defects 61 respectively correspond to near surface resolution, an intermediate thickness and far surface resolution. For a laminated composite material, burial depths of the artificial defects 61 are generally set to depths between a first layer and a second layer, at an intermediate layer, and between a last layer and a second last layer.

By the stepped reference block, testing parameters of a corresponding stepped structure portion of the part can be obtained.

The method for ultrasonic testing of a composite material part is set forth below with an example in which the part 9 to be tested is a fibre-placed resin-based composite material engine case.

First, a stepped reference block with different thicknesses is prepared. The stepped reference block comprises different thickness ranges (35 mm, 25 mm, 20 mm, 22.5 mm, 15 mm, 10 mm and 5 mm), and has thicknesses comprising at least a maximum (35 mm), a minimum (10 mm) and an intermediate thickness value (22.5 mm) of the part to be tested. In addition, to obtain more DAC data, thicknesses of 30 mm, 25 mm, 20 mm, 15 mm and 5 mm are added in this example.

The sizes of the artificial defects of the reference block are determined based on testing requirements. In this example, a defect with a diameter of 6 mm is required to be detected, so artificial defects with a diameter of 3 mm and 6 mm are selected for the designed block.

Burial depths of the artificial defects respectively correspond to near surface resolution, an intermediate thickness and far surface resolution. For a laminated composite material, burial depths of the artificial defects are generally set to depths between a first layer and a second layer, at an intermediate layer, and between a last layer and a second last layer.

Then, angled reference blocks are prepared. The reference blocks are prepared by using the same material as a composite material part to be tested, with the same preparation process. The reference blocks comprise different angular ranges (30°, 25°, 20°, 15°, 10° and 5°), and have angles comprising at least a maximum (30°), a minimum (10°) and an intermediate angle value (20°) of the part to be tested.

Echo amplitudes of artificial defects with different burial depths are measured on the flat surface stepped block. A gain of the echo amplitude at 80% of the full screen height is recorded, and a gain value is recorded. Corresponding amplitudes or gains of artificial defects with the same diameter and different burial depths are drawn into a defect burial depth-echo amplitude (gain) curve, that is, a DAC curve, which is denoted as "DAC-base".

A probe is placed at an initial position of a thin area on an inclined surface of an angled block, and an angle of the probe is adjusted to cause the probe to be perpendicular to a slope surface. In this case, a bottom echo height is adjusted to 80% of the full screen height, and a gain value $\Delta H_1$ is recorded.

A gain value of the first parallel section, $\Delta H_1 - \Delta H_0$, is obtained, to obtain an angle compensation value $\Delta B_{\theta 0}$ of the angled block. The thickness of the parallel section of the thin area is denoted as $d_0 = 10\,mm$. The angle compensation value $\Delta B_{\theta 0}$ reflects acoustic attenuation caused by a deviation angle between the testing surface and the bottom reflection surface.

Starting from the bottom of the slope, testing is performed along the inclined surface section from the bottom to the top, and a bottom echo height Hj at a corresponding position is recorded at a regular interval of distance d = 2 mm.

The optimal incident angle for reflection method testing is obtained by the method for ultrasonic testing of a composite material part. Corresponding to two inclined surface sections of the part 9 to be tested, the optimal incident angles for reflection method testing are 5° and 14.5°, respectively.

Then, corrected DAC values are calculated when the incident angles are 5° and 14.5°, and corrected DAC curves are drawn.

The optimal incident angle for penetration method testing and the optimal receiving angle for penetration method testing are determined by the method for ultrasonic testing of a composite material part. The optimal incident angle should be perpendicular to the testing surface. Corresponding to the two inclined surface sections of the part 9 to be tested, the optimal receiving angles for the penetration method are 5° and 14.5°, respectively.

By means of the angled reference block, the testing scheme for the part 9 to be tested is obtained as follows: penetration method testing is performed. Segmented testing is performed on the part based on parallel sections and inclined surface sections.

Specific scanning parameters are set as follows.

| Tested section | Scanning mode | Incident angle | Receiving angle |
|---|---|---|---|
| Parallel section | Penetration method ultrasonic testing, with double probes | 0° (perpendicular to testing surface) | 0° (perpendicular to testing surface) |
| Inclined surface section | Penetration method ultrasonic testing, with double probes | 0° (perpendicular to testing surface) | β = 5° (left inclined surface)<br><br>β = 14.5° (right inclined surface) |

Parameters of reflection method testing for the first time are as follows.

| Tested section | Scanning mode | Incident angle | Receiving angle | DAC |
|---|---|---|---|---|
| Parallel section | Reflection method, with a single probe | 0° (perpendicular to testing surface) | 0° (perpendicular to testing surface) | DAC-base |

(continued)

| Tested section | Scanning mode | Incident angle | Receiving angle | DAC |
|---|---|---|---|---|
| Inclined surface section below a testing boundary point | Reflection method, with a single probe | 0° (perpendicular to testing surface) | 0° (perpendicular to testing surface) | Corrected DAC-0 |
| Inclined surface section above a testing boundary | Reflection method, with double probes | 0° (perpendicular to testing surface) | 5° (left inclined surface) 14.5° (right inclined surface) | Corrected DAC-0 |

During reflection method testing for the second time, an optimal incident angle β is adopted, and a testing sensitivity is adjusted based on a first DAC correction curve: DAC-β.

Testing parameters used are as follows:

| Tested section | Scanning mode | Incident angle | Receiving angle | DAC |
|---|---|---|---|---|
| Inclined surface section | Reflection method, with a single probe | 5° (left inclined surface) 14.5° (right inclined surface) | β = 5° (left inclined surface) 14.5° (right inclined surface) | Corrected DAC-5° (left inclined surface) Corrected AC-14.5° (right inclined surface) |

In the description of the embodiments of the present application, the technical terms such as "first" and "second" are used merely to distinguish between different objects, and cannot be understood as indicating or implying relative importance or implicitly indicating a number, a specific order, or a primary/secondary relationship of the indicated technical features. In the description of the embodiments of the present application, the phrase "a plurality of" means two or more, unless otherwise explicitly and specifically defined.

The phrase "embodiment" mentioned herein means that the specific features, structures, or characteristics described in conjunction with the embodiment can be encompassed in at least one embodiment of the present application. This phrase at various locations in the description does not necessarily refer to the same embodiment, or an independent or alternative embodiment exclusive of another embodiment. Those skilled in the art understand explicitly or implicitly that the embodiment described herein may be combined with another embodiment.

Finally, it should be noted that the above embodiments are merely used for illustrating rather than limiting the technical solutions of the present application. Although the present application has been illustrated in detail with reference to the foregoing embodiments, it should be understood by those of ordinary skill in the art that the technical solutions described in the foregoing embodiments may still be modified, or some or all of the technical features thereof may be equivalently substituted; and such modifications or substitutions do not make the essence of the corresponding technical solution depart from the scope of the technical solutions of the embodiments of the present application, and should fall within the scope of the claims and the description of the present application. In particular, the technical features mentioned in the embodiments can be combined in any manner, provided that there is no structural conflict. The present application is not limited to the specific embodiments disclosed herein but includes all the technical solutions that fall within the scope of the claims.

**Claims**

1. A method for ultrasonic testing of a composite material part, the method being configured to perform ultrasonic testing on a composite material part, a part to be tested having at least one inclined surface, **characterized in that** the method comprises steps of:

preparing a plurality of angled reference blocks by using the same material and preparation process as the part to be tested, each angled reference block having an inclined surface section, an inclination angle being formed between an upper surface of the inclined surface section and a bottom surface of the angled reference block, and a plurality of inclination angles of the plurality of angled reference blocks comprising at least a maximum value, a minimum value and an intermediate value of an inclination angle of the inclined surface of the part to be tested; determining acoustic attenuation caused by corresponding inclination angles based on the plurality of angled reference blocks;

correcting a DAC curve in a vertical incidence testing mode based on the acoustic attenuation to obtain a compensation DAC correction curve;

obtaining an optimal incident angle for reflection method testing, and obtaining a first DAC correction curve when an incident angle is the optimal incident angle for reflection method testing;

obtaining an optimal incident angle for penetration method testing and an optimal receiving angle for penetration method testing;

testing the part by a penetration method, and testing the inclined surface with an incident probe being at the corresponding optimal incident angle for penetration method testing, and a receiving probe and a surface of the part forming the corresponding optimal receiving angle for penetration method testing;

testing the part for a first time by a reflection method, with the incident probe being perpendicular to the surface of the part, and adjusting a testing sensitivity based on the compensation DAC correction curve; and

testing the part for a second time by the reflection method, with the incident probe and the surface of the part forming the corresponding optimal incident angle for reflection method testing during testing of the inclined surface, and adjusting the testing sensitivity based on the first DAC correction curve.

2. The method for ultrasonic testing of a composite material part according to claim 1, **characterized in that** each of the angled reference blocks further has a first parallel section and a second parallel section, and the inclined surface section is connected between the first parallel section and the second parallel section,

wherein a thickness of the first parallel section is the same as a thickness of a thinnest portion of the part to be tested, and a thickness of the second parallel section is greater than a thickness of a thickest portion of the part to be tested.

3. The method for ultrasonic testing of a composite material part according to claim 2, **characterized in that** determining the acoustic attenuation comprises steps of:

placing an ultrasonic probe at the first parallel section, measuring a bottom echo, and adjusting an echo height to 80% of a full screen height to obtain a first gain value;

placing an ultrasonic probe at a junction of the inclined surface section and the first parallel section, adjusting an angle of the ultrasonic probe such that an incident angle of a sound wave emitted by the ultrasonic probe is perpendicular to the inclined surface section, measuring a bottom echo, and adjusting an echo height to 80% of the full screen height to obtain a second gain value; and

subtracting the first gain value from the second gain value to obtain an angle compensation value of the angled reference block, and reflecting the acoustic attenuation corresponding to an inclination angle by the angle compensation value.

4. The method for ultrasonic testing of a composite material part according to claim 3, **characterized by** further comprising steps of:

obtaining a testing boundary point of the angled reference block at the inclined surface section, and dividing the inclined surface section into a first inclined surface section and a second inclined surface section with the testing boundary point as a boundary, the first inclined surface section extending from a terminal position of the first parallel section to the testing boundary point, and the second inclined surface section extending from the testing boundary point to an initial position of the second parallel section,

wherein the second inclined surface section is tested by double probes.

5. The method for ultrasonic testing of a composite material part according to claim 4, **characterized in that** determining the testing boundary point comprises steps of:

recording, from the junction of the inclined surface section and the first parallel section, a bottom echo height at a corresponding position at a regular interval of distance, and adjusting the echo height to 80% of the full screen height of a display to obtain a third gain value;

calculating a bottom reflection distance in an acoustic propagation direction perpendicular to a slope surface;

drawing a correlation curve between the bottom reflection distance and the third gain value;

calculating a first difference between the third gain value obtained at the regular interval of distance and the first gain; and

obtaining a first threshold, determining a magnitude relationship between the first difference and the first threshold, and if the first difference is greater than the first threshold, selecting a first testing point after the first difference is greater than the first threshold as the testing boundary point.

6. The method for ultrasonic testing of a composite material part according to claim 4, **characterized in that** obtaining the optimal incident angle for reflection method testing comprises steps of:

taking, based on an angle of the inclined surface of the part to be tested, a corresponding angled reference block, and inverting the angled reference block;
using an incident probe to project an ultrasonic wave from an inverted bottom reflection horizontal plane at an angle perpendicular to the plane, and using a receiving probe to receive a transmitted ultrasonic signal from the inclined surface section; and
adjusting an angle of the receiving probe such that the received signal reaches a maximum value, and obtaining an included angle between an ultrasonic direction and the inclined surface section in this case as the optimal incident angle for reflection method testing.

7. The method for ultrasonic testing of a composite material part according to claim 6, **characterized in that** obtaining the first DAC correction curve comprises steps of:

measuring a bottom reflection distance and a gain value when the incident angle is the optimal incident angle for reflection method testing;
drawing a bottom reflection distance and echo gain curve when the incident angle is the optimal incident angle for reflection method testing; and
calculating an angle compensation value of the angled reference block when the incident angle is the optimal incident angle for reflection method testing, and correcting the DAC curve in the vertical incidence testing mode based on the angle compensation value.

8. The method for ultrasonic testing of a composite material part according to claim 4, **characterized in that** obtaining the optimal incident angle for penetration method testing and the optimal receiving angle for penetration method testing comprises steps of:

determining the optimal incident angle for penetration method testing as an angle perpendicular to a testing surface of the part;
taking, based on an angle of the inclined surface of the part to be tested, a corresponding angled reference block, and inverting the angled reference block;
using an incident probe to project an ultrasonic wave from an inverted bottom reflection horizontal plane at an angle perpendicular to the plane, and using a receiving probe to receive a transmitted ultrasonic signal from the inclined surface section; and
adjusting an angle of the receiving probe such that the received signal reaches a maximum value, and recording an included angle between a direction in which the receiving probe receives the ultrasonic wave and the inclined surface section in this case as the optimal receiving angle for penetration method testing.

9. The method for ultrasonic testing of a composite material part according to claim 1, **characterized in that** the part to be tested further comprises a stepped structure, and the method for ultrasonic testing of a composite material part further comprises:

preparing a stepped reference block by using the same material and preparation process as the part to be tested; and
providing an artificial defect in the stepped reference block.

10. The method for ultrasonic testing of a composite material part according to claim 1, **characterized in that** the method for ultrasonic testing of a composite material part is configured to test a composite material engine case.

9

90                    90

FIG. 1

1

FIG. 2

FIG. 3

$I_{0a}$  $R_{1a}$

$\theta a$  $Sa$

$\theta a$

1a

100a

FIG. 4A

$R_{1b}$

$I_{0b}$

$\theta b$

1b

100b

FIG. 4B

FIG. 4C

FIG. 4D

FIG. 5

FIG. 6

6

61

FIG. 7

## INTERNATIONAL SEARCH REPORT

| International application No. |
| --- |
| **PCT/CN2023/101485** |

**A. CLASSIFICATION OF SUBJECT MATTER**

G01N29/04(2006.01)i

According to International Patent Classification (IPC) or to both national classification and IPC

**B. FIELDS SEARCHED**

Minimum documentation searched (classification system followed by classification symbols)

IPC: G01N29

Documentation searched other than minimum documentation to the extent that such documents are included in the fields searched

Electronic data base consulted during the international search (name of data base and, where practicable, search terms used)

CNABS, CNTXT, CNKI, 百度学术, BAIDU SCHOLAR: 复合材料, 超声, 斜面, 角, 距离, 幅度, 衰减, 补偿, 增益, 穿透, 反射, 阶梯; VEN, USTXT, WOTXT, EPTXT: composite materials, ultrasonic, slope, angle, DAC, distance, amplitude, attenuation, compensation, gain, transmission, reflection, stair

**C. DOCUMENTS CONSIDERED TO BE RELEVANT**

| Category* | Citation of document, with indication, where appropriate, of the relevant passages | Relevant to claim No. |
| --- | --- | --- |
| A | CN 108008010 A (SHANGHAI SHIP ENGINEERING QUALITY TESTING CO., LTD. et al.) 08 May 2018 (2018-05-08)<br>description, paragraphs 37-39, and figures 1-10 | 1-10 |
| A | CN 107966494 A (KOCEL MACHINERY LTD.) 27 April 2018 (2018-04-27)<br>entire document | 1-10 |
| A | CN 113125562 A (WUHAN UNIVERSITY OF TECHNOLOGY) 16 July 2021 (2021-07-16)<br>entire document | 1-10 |
| A | CN 112379001 A (LUOYANG LYC BEARING CO., LTD. et al.) 19 February 2021 (2021-02-19)<br>entire document | 1-10 |
| A | JP 2003028841 A (NIPPON KRAUTKRAEMER K. K. et al.) 29 January 2003 (2003-01-29)<br>entire document | 1-10 |
| A | KR 940007558 A (SAMSUNG ELECTRONICS CO., LTD.) 27 April 1994 (1994-04-27)<br>entire document | 1-10 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **19 September 2023** | **22 September 2023** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

INTERNATIONAL SEARCH REPORT
Information on patent family members

International application No.

**PCT/CN2023/101485**

| Patent document cited in search report | | | Publication date (day/month/year) | Patent family member(s) | | | Publication date (day/month/year) |
|---|---|---|---|---|---|---|---|
| CN | 108008010 | A | 08 May 2018 | None | | | |
| CN | 107966494 | A | 27 April 2018 | None | | | |
| CN | 113125562 | A | 16 July 2021 | CN | 113125562 | B | 03 June 2022 |
| CN | 112379001 | A | 19 February 2021 | None | | | |
| JP | 2003028841 | A | 29 January 2003 | None | | | |
| KR | 940007558 | A | 27 April 1994 | KR | 0150962 | B1 | 15 October 1998 |

Form PCT/ISA/210 (patent family annex) (July 2022)